# EUROPEAN PATENT APPLICATION

(11) **EP 0 593 183 A2**
(43) Date of publication of application: **20.04.1994**
(21) Application number: 93307812.3
(22) Date of filing: 01.10.1993
(51) Int. Cl.: G06F 15/70

(54) **Video/cad image comparator system**

(30) Priority: 16.10.1992 US 962472
(71) Applicant: POLAROID CORPORATION, Cambridge, Massachusetts 02139 (US)
(72) Inventor: Doherty, Peter R., Jr., Billerica, MA 01821 (US); Ventre, Charles M., Saugus, MA 01906 (US); Gibb, Robert O., Georgetown, MA 01833 (US)
(74) Representative: Skone James, Robert Edmund

(57) **Abstract**

Video monitor images which include at least one object showing multiple dimensions are superimposed with CAD images which include the corresponding designed dimensions of the object. Such images are substantially overlaid, aligned and focused so that the CAD designed dimensional images substantially match the corresponding video monitor images and any differences between the dimensions of the video images and the corresponding CAD designed dimensions of the CAD images may be readily determined.

## Description

The present invention relates to a method and apparatus that enables one to readily compare a video image of an object with a computer data base generated image of the same object to determine dimensional differences between them.

More specifically by the present means it is possible to readily determine whether or not multiple dimensions of objects or parts meet specifications. Such determinations include three dimensional determinations.

In the manufacture of multicomponent products such as photographic cameras and the like, the manufacturer frequently subcontracts the production of many of the product's parts. Different manufacturers may be making various parts which are assembled into a single product by the manufacturer. Although such subcontractors are given dimensional tolerances such parts may fail to exactly meet specifications particularly where such parts must meet multiple dimensional specifications. It has been found that even where the component is CAD (computer aided design) designed and such design is made available to parts manufacturers one or more critical dimensions are frequently wrong. The method and apparatus of the present invention enable the quick and effective determination if such parts are dimensionally sound.

It is known to analyze the video images of objects to quantify or verify their position or their dimensional integrity. Typically, a video camera provided with an array of light-sensitive elements is positioned above an object so that light reflecting from the object forms an image on the array. By employing a monitor screen pixel grid it is possible to determine the length of a few dimensional parameters of a prepositioned object. Such a system is taught by US Patent 4,781,463 to Rosen et. al. However, these systems are not capable of the rapid multi-parameter determinations of the method and apparatus of the present invention.

In accordance with one aspect of the present invention, a method of verifying multiple dimensions of a test object comprises the steps of:
a) projecting a video image of a reference object having known generally orthogonal dimensions on a monitor screen;
b) projecting a CAD system computer image of the reference object on the screen, said reference object computer image being derived from a data base which stores an image and dimensions of the reference object;
c) positioning the CAD system computer image of the reference object to essentially the same position as the video image of the reference object on the monitor screen and adjusting the size of the CAD system computer image of the reference object to the same size as the video image of the reference object;
d) positioning a CAD system computer image of the test object on the monitor screen to essentially the same position as a video image of the test object in a best fit overlying relation; and
e) determining the existence of any dimensional differences between the video image and the CAD system computer image of the test objects.

In accordance with a second aspect of the present invention, apparatus for verifying multiple dimensions of a test object comprises
a) a monitor screen for displaying a video image of a reference object having known generally orthogonal dimensions;
b) means for displaying a CAD system computer image of the reference object on said monitor screen, said reference object computer image being derived from a data base which stores an image and dimensions of the reference object;
c) means for positioning the CAD system computer image of the reference object to essentially the same position on said monitor screen as the video image of the reference object and for adjusting the size of the CAD system computer image of the reference object to the same size as the video image of the reference object; and
d) means for positioning the CAD system computer image of the test object to essentially the same position as a video image of the test object in a best fit overlying relation so that any dimensional differences between the video and CAD system computer images of the test object can be determined.

CAD or computer aided design systems are well known computer software programs used to create engineering designs of many present day manufactured products. Their graphic capabilities include effecting line drawings on monitor screens of parts or objects that are dimensionally accurate. Such dimensional accuracy is, of course, relative accuracy with respect to the various other dimensions of the object. However, since CAD or CAD/CAM (computer aided manufacturing) programs can provide the actual dimensions of a given CAD designed object, the relative dimension of any monitor projection can be easily obtained (i.e. a 1/4'' measurement on any given line may represent 1'' or 1').

A video monitor projection is, of course, a projection of an actual object and by selective positioning of the object many of the object's relative dimensions can be shown. These dimensions can be highly accurate with respect to the plane of the video screen, provided the actual object has clearly discernable edges (usually optimized by a number of illumination techniques).

Since a video screen or a computer monitor is flat and two-dimensional, three-dimensional measurements of an object's dimensions are not presently feasible. However, the object may be rotated to new positions and the CAD projection appropriately revised to effect various dimensional measurements of the object. Further, where dimensions differ in depths of about 1/4'' or less it is possible to use gauging lenses with good depth of field capability to effectively verify such differing dimensions for one set of object images.

A difference between the video image projection and the CAD projection is, of course, that the CAD image is accurate since this is the actual design of the part (i.e. the specifications the manufacturer has agreed to meet) while the video image is accurate only to the extent the fabricator has accurately duplicated the object of the specifications.

The present invention is the discovery that by superimposing CAD images and video images of the same object on a single screen in an overlying best fit relation wherein each of said images should have the same dimensions it is possible to determine whether all of the superimposed video images are accurate. If a dimension is off (i.e. a video dimensional image does not equal its corresponding CAD image) it will be visibly and quantitatively discernable, particularly if a color monitor is used and the two projections are in different colors. The quantitative determination is easily made using measure functionality of the CAD system.

Actually, if there are multiple dimensions, it generally may be presumed a majority of the video image dimensions are accurate and by simply attempting to match the CAD images with the video images one can readily ascertain if there is a lack of accuracy in one or more of the video images.

Another useful aspect of the method and apparatus of the present invention is that if one has a desired part or object that is known to be dimensionally accurate but does not have a CAD data base of the object such a data base can be readily obtained by establishing a dimensional relationship between the size of a video image of the object and the size of the corresponding CAD image to be generated and then simply transferring the video image into the CAD data base point-by-point. The resulting data base may then be used to duplicate the desired part or object.

The present invention provides an apparatus and method to quickly and accurately determine the dimensional integrity of an object.

The apparatus can also provide a method for creating a CAD data base of an object from the object.

Aspects of the present invention provide a method for readily analyzing the motion of a moving object.

The present invention can also provide a means for testing the dimensional integrity of an object by superimposing a video image of the object and a CAD image of the same object on a single monitor screen and comparing the two images.

Examples of the invention will now be described with reference to the accompanying drawings, in which:-
Figure 1A is an illustrative depiction of the overall system, including a VCR input alternative to a video camera input, which is contemplated by the method and apparatus of the present invention;
Fig. 1B depicts a square reference target employed in the calibration of the Video/CAD Image Comparator System of the present invention;
Fig. 2 shows separate and then merged CAD data base and video images of an arbitrarily shaped object or piece-part; and
Fig. 3 shows separate and then merged CAD data base and video images of developer liquid from a ruptured pod thereof, at various stages of liquid movement, being spread between adjacent sheets of a conventional, self-developing, integral film unit.

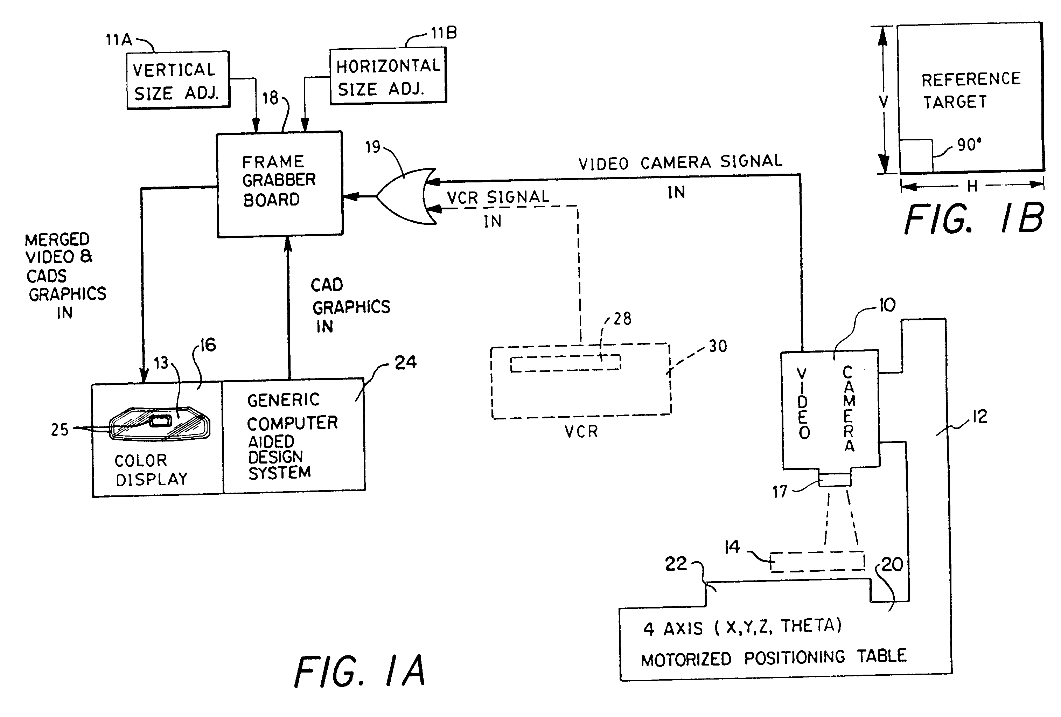

Referring to Fig. 1A, the apparatus of the present invention, in a basic configuration, includes a conventional Computer Aided Design (CAD) Software System whose data base stores an image of an object to be measured (a test object) which may be graphically displayed on a video screen. There are many of such systems available nearly any of which can be employed in the performance of the method of the present invention. Illustrative softwares are AutoCAD (Autodesk Inc., 2320 Marinship Way, Sausalito, CA 94965), CADKey (CADKey Inc., 440 Oakland St., Manchester, CT 06040), and VersaCAD/386 (Computervision, 100 Crosby Drive, Bedford, MA 01730). The system employed in the reduction to practice of this invention was Computervision Personal Designer CAD system.

The apparatus also includes a video camera for generating a video image of the test object held in a particular orientation by a support fixture (not shown). The video camera 10, includes a telecentric (or gauging) lens which has a relatively large depth of field (up to 1/2 in.) so that precise positioning of the video camera lens with respect to the test object is not necessary. Also, the use of a telecentric lens avoids the introduction of magnification errors into the measurement system that conventional optics would produce if the lens was not precisely positioned with respect to the test object. Signals representative of both the computer generated image and the video image are combined in a conventional image signal mixing circuit (a frame grabber), such as the Multi-Media Graphics Adapter Model DVA-4000 ISA sold by Video Logic, Inc. of Cambridge, MA, for the subsequent and simultaneous display on a video monitor or screen. The signal mixing circuit is provided with conventional vertical and horizontal video image size adjustment controls 11A and 11B in order to compensate for any image size errors that might be introduced by the video imaging system.

A known dimensional relationship is established between a dimension of a video image of the test object and the same dimension on a computer generated image of the same object (a calibration function) such that when these images are positioned on a video screen in a best fit overlying relation, dimensional differences between these object images may be readily observed.

The dimensional relationship between video and CAD images of the test object may be established by means of the following calibration process steps. A reference target (Fig. 1B)(a square object, for example, having precisely known vertical (V) and horizontal (H)(orthogonal) dimensions and optimal edge definition as discerned by the video system) is placed on an X,Y,Z, Theta support table that also supports the test object. It is preferable that the reference target be supported in the plane of the test object dimension to be measured. Prior to this time a CAD image and dimensions of the reference target are drawn or introduced into the CAD system data base, in a conventional manner, by a CAD systems operator. A video camera generated image of the reference target is then projected or displayed on the video monitor. The pan and scroll function together with the zoom scale of the CAD system graphics and/or the reference target support table are adjusted until the video and CAD images of the reference target coincide, as closely as possible, in a best fit overlying relation. The vertical and horizontal video image size controls, 11A and 11B, (Fig. 1A) are then manually adjusted until the vertical and horizontal size of the video image of the reference target displayed on the video screen precisely match the vertical and horizontal size of the CAD image thereof, respectively. Theoretically, at least, when this adjustment is complete the desired dimensional relationship or calibration between the video and CAD image of a test object is thereby established.

As a practical matter, however, a test object feature, whose dimensions are of interest, may have less than optimal video edges. In such an instance an additional calibration procedure would be appropriate. This additional calibration procedure would be to direct an image of an X,Y,Z, Theta table supported test object, having a known dimension from either a video camera or a storage medium such as a video tape, to the same video monitor. The image and dimensions of the test object would have already been introduced into the CAD system data base. The measure function of the CAD system would then be employed to verify that the known dimension on the test object and the video image thereof are the same. If necessary the pan and scroll functions together with the zoom scale of the CAD system graphics and/or the X,Y,Z, Theta table would be adjusted until the video and CAD images of the known test object dimension coincide. When this adjustment is complete the additional calibration procedure is also complete. The known dimension on the test object and the test object dimension to be measured are preferably located within a single relatively thin plane. As a practical matter, such a positional relationship seldom occurs. However, as noted above, the lens employed by the video camera 10 is telecentric with an attendant large depth of field and therefore such positioning of these dimensions within a single thin plane is not necessary.

The measurement apparatus of the present invention includes the CAD system's data storage capability. Such a system will provide the dimensional figures for any CAD image projected onto the monitor screen. Consequently once a known dimensional relationship has been established between the CAD and video images or one or more of the known dimension video images has been matched with a corresponding CAD image other dimensions of the video image may be determined by calling up such data from the CAD system data base.

As noted above, the video camera incorporates a telecentric taking lens, of fixed magnification, having a relatively large depth of the field so that precise positioning of either the test object or the reference object is not necessary in order to obtain proper object focus. More importantly though, the greater the magnification of the video camera taking lens, which typically runs from 1X to 50X, the more accurate the comparison between the computer generated and video images of the test object. Also, as noted above, a conventional X,Y,Z, Theta table is provided whose function is to support the above-noted support fixture in order to facilitate the lateral, vertical and rotational movement of the video image of the test object on the video screen. In addition, supplemental illumination would be provided in order to produce a bright video image.

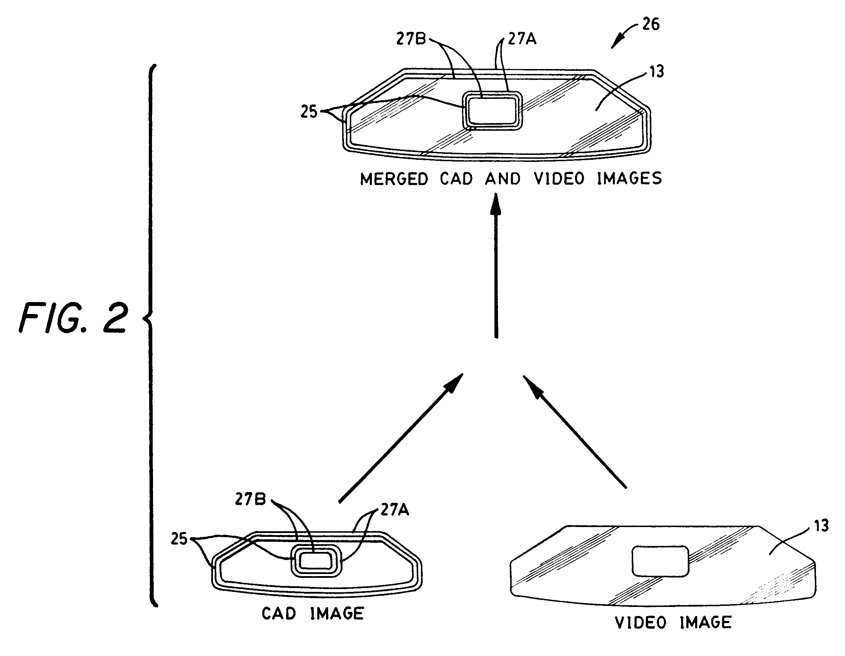

In an attempt to design an entire photographic camera using a conventional CAD system it was assumed that vendor supplied camera parts would precisely conform to the appropriate CAD System generated drawings because such vendors were provided with access to the camera dimension-containing CAD system data base. However, it was discovered this was not the case. The present comparator system was successfully employed to inspect such parts prior to attempting assembly and thereby uncover many non-conforming parts. A video camera 10 Sony Model No. XC-711 manufactured by Sony Component Products of Paramus, N.J. is mounted to a frame 12, as illustrated in Fig. 1A of the drawings and forms an image 13 of a part 14 on a color monitor 16 (NEC Multi-Sync #5D Monitor model no. JC 2002VMA) through a signal mixing circuit 18 (Frame Grabber Board, video Logic DVA-4000/ISA) and an OR-gate 19. The video camera 10 has a fixed magnification telecentric lens 17. The frame 12 was provided with a table support section 20 on which an adjustable X,Y,Z, Theta table 22 was mounted. A known dimensional relationship or calibration was then established between a dimension of a video image of the part 14 and a CAD image of the same part 14 in the previously described manner. Part 14 was positioned on the X,Y,Z, Theta table on a support fixture (not shown) with the desired parameters to be measured facing the camera. A generic Computer Aided Design System 24 was used to project a CAD image 25 of the same part onto the color display 16 through the same signal mixing circuit 18. As best shown in Fig. 2, the video image 13 was laterally adjusted by a pan and scroll function control of the CAD system to superimpose (or be superimposed by) and be in alignment with the CAD image 25 so that the two images coincided as closely as possible. Overlaying of the CAD and video images may also be accomplished by adjusting the X,Y,Z, Theta table 22. However, it is much easier to manipulate the position of the CAD image for such purposes. The combined or merged images are designated numeral 26 in Fig. 2. Dimensional differences between the CAD and video images of the part 14 can now be readily observed and/or determined on the color monitor 16. Since the CAD images are known to be correct it is a simple matter to visually observe any video image dimensions that do not coincide. Adjusting the zoom scale of the CAD system graphics after the video image to CAD image calibration process has been completed must be avoided in order to avoid introducing measurement errors into the video/CAD image comparator system of the present invention. Also, the CAD system has the additional capability of superimposing an image of the tolerance or the upper and lower dimensional limits of the CAD image dimensions of the test object on the video image. This capability increases ones ability to readily detect an object dimension that is out of tolerance. In Fig. 2 the superimposed upper and lower dimensional limits of the CAD generated image are designated 27A and 27B, respectively therein.

As explained above, the video image of the test object to be measured was directly derived from the output of the video camera 10. However, the video image of the test object to be measured (e.g. part 14) may be indirectly derived from a video tape (or other image storage medium) such as that contained in a video cassette. Instead of applying the video image signal directly to the signal mixing circuit 18, through, for example, the OR-gate 19, an object to be measured (the test object) could be scanned by a video camera ,e.g. camera 10, and the resulting image recorded on video tape such as that employed in video cassette 28 (Fig. 1A). The calibration step, mentioned above, would be performed at the time that the video tape of the test object is inserted into the VCR 30 for dimensional comparison of the video generated and CAD images of the test object on the color monitor 16. The recorded image would then be applied to the signal mixing circuit 18 through a conventional video cassette recorder (VCR) 30 and the OR-gate 19 instead of being applied directly from the video camera 10. However in the VCR mode of operation the known dimensional relationship (calibration step) would be established by utilizing a known parameter of the video image of the test object as explained above and not by employing a reference target with a known dimension. Zooming of the CAD system graphics would be performed with respect to this known video image parameter. Movement of the CAD image of the test object with respect to the video image thereof to overlay one with the other is accomplished by manipulating the above noted pan and scroll control function of the CAD system. In this VCR mode of operation the X,Y,Z, Theta table 22, though not preferred, could be used to position a test object relative to a video camera but not to align the CAD and video images thereof in an overlying relation. This video cassette/VCR arrangement would make the video camera 10 available to record (scan) the image of additional parts with the aid of an additional VCR (not shown) while another part or test object, whose image was previously recorded, was being measured by the video/CAD comparator system of the present invention.

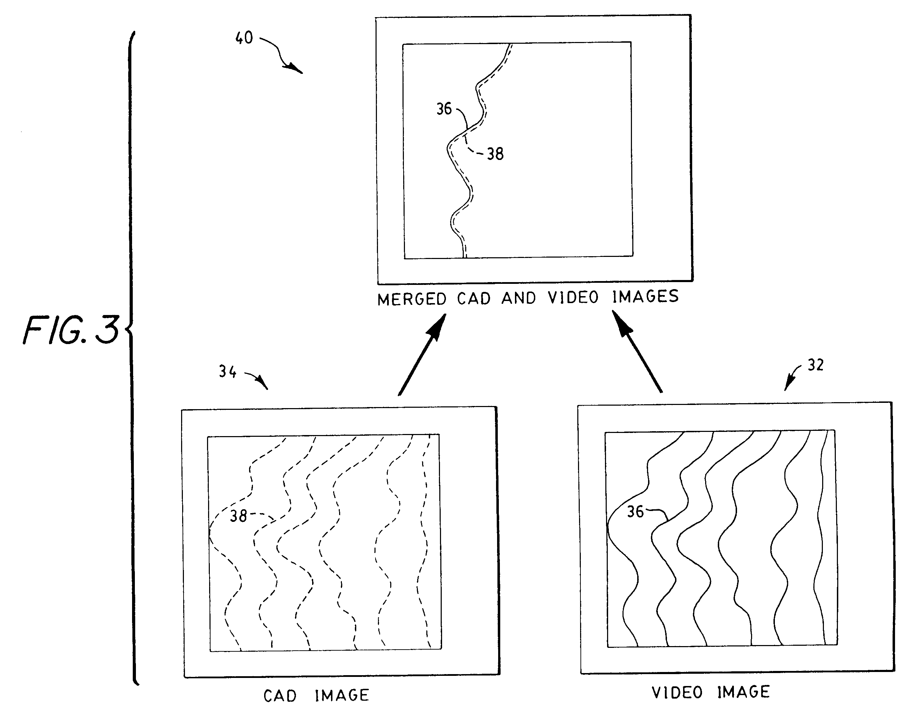

The video/VCR comparator system of the present invention may also be employed to analyze the motion of a moving body once the above-mentioned calibration procedure has been performed. With additional reference to Fig. 3, a recorded or video tape image 32 and a corresponding CAD image 34 depicting the motion of developer liquid being spread between adjacent sheets of a conventional, self-developing, integral film unit such as that described in U.S. Patent No. 3,607,285 to Chen, are illustrated. The video image 32 would be made, for example, every millisecond during a developer liquid spreading cycle. This resulting video image would then be copied point-by-point into the data base of the CAD system in a conventional manner. The copied CAD image would then be used as a reference for comparison with other integral film units, wherein the developer liquid is spread in the same manner, in order to determine if the developer liquid spreads differently in these other integral film units. A single video frame of the position of the leading edge of the developer liquid in a subsequent film unit being tested, which is represented in the video image 32 as numeral 36, is extracted from the video image 32 at a particular time during the developer liquid spread cycle. The corresponding video frame in the CAD image represented by the numeral 38 is similarly extracted from the CAD image 34 at the same spread cycle time. These CAD and video image frames are then superimposed on one another as shown in the merged CAD and video images 40. The video image 36 and the CAD image 38 of the moving liquid have been slightly spaced from one another in order to facilitate the description of this measurement technique. Any deviation between the CAD image of the leading edge of the developer liquid and the video image of the leading edge of the developer liquid at this point in time in the spread cycle can be readily viewed on the video screen or color monitor 16 in the same manner described above with respect to the measurement of object 13 in Fig. 2. This procedure would then be repeated for other times during the developer liquid spread cycle until the behavior of the developer liquid during the entire spread cycle had been observed.

It should be noted that the invention as described herein has been described as measuring the dimensions of a part or object. The term object also includes the developer liquid mentioned above and/or a plurality of parts or objects such as might be assembled in a subassembly of a larger product or device. Very often when newly manufactured individual parts are assembled into such a subassembly they become physically distorted as a direct result of such assembly because of part dimensions failing to meet engineering specifications. The video/CAD image comparator system of the present invention may be readily employed to detect such unwanted assembly-caused distortions. The subassembly would be treated as a single part or object and the measurement procedure would be the same as that employed above for a single object.

It was noted that once all of the dimensions were confirmed it would have been a simple matter to duplicate the dimensions into a CAD program and reverse the process to acquire a CAD program which could then be used to produce (or test) additional such parts.

This invention may be practiced or embodied in still other ways without departing from its spirit or essential character. The embodiment described herein is therefore illustrative and not restrictive, the scope of the invention being indicated in the appended claims and all variations which come within the meaning of the claims are intended to be embraced thereby.

## Claims

1. A method of verifying multiple dimensions of a test object, comprising the steps of:
a) projecting a video image of a reference object having known generally orthogonal dimensions on a monitor screen;
b) projecting a CAD system computer image of the reference object on the screen, said reference object computer image being derived from a data base which stores an image and dimensions of the reference object;
c) positioning the CAD system computer image of the reference object to essentially the same position as the video image of the reference object on the monitor screen and adjusting the size of the CAD system computer image of the reference object to the same size as the video image of the reference object;
d) positioning a CAD system computer image of the test object on the monitor screen to essentially the same position as a video image of the test object in a best fit overlying relation; and
e) determining the existence of any dimensional differences between the video image and the CAD system computer image of the test objects.

2. The method of claim 1 comprising the additional step of superimposing a CAD image of the upper and lower dimensional limits of the CAD image dimensions of the test subject on the video image thereof.

3. The method of claim 1 or claim 2, comprising the additional steps of:
f) projecting a video image of the test object including at least one known dimension thereof on said monitor screen;
g) projecting a CAD system computer image of the test object on the monitor screen, said test object computer image being derived from a data base which stores an image and dimensions of the test object; and
h) adjusting the size of the CAD system computer image of a test object dimension to the same size as the video image of a known dimension of the test object.

4. The method of any of the preceding claims, wherein the step of adjusting the size of the CAD system computer image of a test object dimension includes the step of adjusting said test object dimension to the same size as the video image of a corresponding test object dimension.

5. The method of any of the preceding claims, wherein said video images of the reference object and the test object are derived from a video camera having a selected magnification wherein the selected magnification of the video camera is the same for the derivation of each such video image.

6. The method of any of the preceding claims, wherein said video image and CAD computer image are combined in an image signal mixing circuit for the subsequent simultaneous display on said monitor screen.

7. Apparatus for verifying multiple dimensions of a test object comprising:
a) a monitor screen for displaying a video image of a reference object having known generally orthogonal dimensions;
b) means for displaying a CAD system computer image of the reference object on said monitor screen, said reference object computer image being derived from a data base which stores an image and dimensions of the reference object;
c) means for positioning the CAD system computer image of the reference object to essentially the same position on said monitor screen as the video image of the reference object and for adjusting the size of the CAD system computer image of the reference object to the same size as the video image of the reference object; and
d) means for positioning the CAD system computer image of the test object to essentially the same position as a video image of the test object in a best fit overlying relation so that any dimensional differences between the video and CAD system computer images of the test object can be determined.

8. The apparatus of claim 7, further comprising:
e) first means for directing a video image of the test object including at least one known dimension thereof to said monitor screen;
f) second means for projecting a CAD system computer image of the test object onto said screen, said test object computer image being derived from a data base which stores an image and dimension of the test object; and
g) means for adjusting the size of the CAD system computer image of a test object dimension to the same size as the video image of a known dimension of the test object.

9. The apparatus of claim 7 or claim 8, wherein said monitor screen is a color monitor and said CAD and video images are of different colors.

10. The apparatus of any of claims 7 to 9, wherein said first means for directing a video image of the test object includes an image storage medium.

11. A method of creating a CAD system data base of the dimensions of a given object of known dimensions, comprising the steps of:
a) projecting a video image of a reference object having known generally orthogonal dimensions on a monitor screen;
b) projecting a CAD system computer image of the reference object on said screen, said reference object computer image being derived from a data base which stores an image and dimensions of the reference object;
c) positioning the CAD system computer image of the reference object to essentially the same position as the video image of the reference object and adjusting the size of the CAD system computer image of the reference object to the same size as the video image of the reference object; and
d) introducing said known given object dimensions into said CAD system data base.

12. A method of analyzing the motion of a moving object during an object movement cycle, comprising the steps of:
a) projecting a video image of a reference object having known generally orthogonal dimensions on a monitor screen;
b) projecting a CAD system computer image of the reference object on said screen, said reference object computer image being derived from a data base which stores an image and dimensions of the reference object;
c) positioning the CAD system computer image of the reference object to essentially the same position as the video image of the reference object and adjusting the size of the CAD system computer image to the same size as the video of the reference object;
d) storing an image of the position of a first moving object, at various selected times during a first object movement cycle, in the data base of a CAD system;
e) projecting a CAD system computer image of the first object derived from the CAD system data base, at a particular time during the object movement cycle, on a video monitor screen;
f) storing an image of the position of a second moving object in a video image storing medium at various selected times during the second object movement cycle;
g) projecting a video image of the second moving object, at the same particular time, on the video monitor screen;
h) adjusting the CAD system image of the first moving object and the video image of the second moving object to essentially the same position in a best fit overlying relation;
i) determining the existence of any dimensional differences between the video image of the second object and the CAD image of the first object; and
j) repeating steps e,g,h and i for other times during the first and second object movement cycles.
